# EUROPÄISCHE PATENTANMELDUNG

(11) **EP 3 882 596 A2**
(43) Veröffentlichungstag der Anmeldung: **22.09.2021**
(21) Anmeldenummer: 21157028.8
(22) Anmeldetag: 15.02.2021
(51) Int. Cl.: G01L 3/10, G01L 3/14, G01D 5/14, G01P 3/487

(54) **MESSANORDNUNG AN EINER DREHBAREN WELLE**

(30) Priorität: 16.03.2020 DE 102020203302
(71) Anmelder: ContiTech Antriebssysteme GmbH, 30165 Hannover (DE)
(72) Erfinder: Fiss, Tim, 30419 Hannover (DE); Rosenbohm, Svenja, 30419 Hannover (DE); Siekmeyer, Robin, 30419 Hannover (DE); Sipilä, Pekka, 30419 Hannover (DE)
(74) Vertreter: Continental Corporation

(57) **Zusammenfassung**

Die Erfindung betrifft eine Messanordnung (24) zur sensorischen Messung zumindest eines übertragenen Drehmomentes einer um ihre Längsachse (4) drehbaren Welle (2), wobei die Welle wenigstens zwei über einen torsionselastischen Abschnitt (10) miteinander verbundene Teilwellen (6, 8) aufweist, wobei benachbart zu dem torsionselastischen Abschnitt (10) axial beidseitig zumindest mittelbar an den beiden Teilwellen jeweils ein umfangsseitig codiertes Signalgeberelement (26, 28) angeordnet ist, und wobei radial über jedem der beiden Signalgeberelemente jeweils ein Sensor (30, 32) angeordnet ist, welche über Sensorleitungen (34, 36) mit einer elektronischen Auswerteeinheit (38) verbundenen sind. Zur Bereitstellung einer Messanordnung mit einer hohen Auflösung der Drehbewegung der Welle, kompakten Abmessungen und einem relativ geringen Fertigungsaufwand ist vorgesehen, dass die Signalgeberelemente (26, 28) als Magnetringe (40, 42) ausgebildet sind, welche aus einem ferromagnetischen Material bestehen, dass die Magnetringe (40, 42) derart magnetisiert sind, dass über zumindest einen Umfangsabschnitt derselben wechselweise Nordpoldomänen (N) und Südpoldomänen (S) aufeinanderfolgend angeordnet oder ausgebildet sind, und dass die Sensoren (30, 32) als magnetfeldresistive Sensoren ausgebildet sind.

## Beschreibung

Die Erfindung betrifft eine Messanordnung zur sensorischen Messung zumindest eines übertragenen Drehmomentes einer um ihre Längsachse drehbaren Welle, wobei die Welle wenigstens zwei über einen torsionselastischen Abschnitt miteinander verbundene Teilwellen aufweist, wobei benachbart zu dem torsionselastischen Abschnitt axial beidseitig zumindest mittelbar an den beiden Teilwellen jeweils ein umfangsseitig codiertes Signalgeberelement angeordnet ist, und wobei radial über jedem der beiden Signalgeberelemente jeweils ein Sensor angeordnet ist, welche über Sensorleitungen mit einer elektronischen Auswerteeinheit verbundenen sind.

Bei technischen Anlagen und Maschinen, die drehbare Wellen aufweisen, kommen Messanordnungen mit Signalgebern und/oder Sensoren zum Einsatz, mit denen das von der jeweiligen Welle übertragene Drehmoment, die Drehzahl der jeweiligen Welle und/oder das Durchlaufen einer bestimmten Drehwinkelposition durch die jeweilige Welle gemessen werden können. Aus dem Produkt aus der Drehzahl und dem übertragenen Drehmoment kann die von einer Welle aufgenommene beziehungsweise übertragene Antriebsleistung berechnet und damit zum Beispiel der Wirkungsgrad einer Anlage oder Maschine bestimmt werden.

Zur sensorischen Messung des von einer Welle übertragenen Drehmomentes können beispielsweise Dehnmessstreifen verwendet werden, die unmittelbar auf der Außenwand der Welle, zum Beispiel in Form einer Brückenschaltung, aufgeklebt sind, und deren elektrische Widerstände sich in Abhängigkeit von der torsionsbedingten Verformung der Welle ändern.

Eine andere Möglichkeit zur sensorischen Messung des von einer Welle übertragenen Drehmomentes besteht in der Anordnung von Kraftmessdosen zwischen den Zahnflanken der miteinander in Eingriff stehenden Zahnstege einer ersten Teilwelle mit radial nach innen gerichteten Zahnstegen und einer zweiten Teilwelle mit radial nach außen gerichteten Zahnstegen. Bei einer derartigen Anordnung von Sensoren an oder in einer Welle ergibt sich jedoch eine relativ geringe Auflösung des Messbereiches in Verbindung mit einer hohen Streuung der Messwerte und der Erfordernis, diese zu verstärken. Zudem müssen bei derartigen Messanordnungen die Speisespannungen und die Messspannungen von einem Gehäuse auf die Welle beziehungsweise von der Welle in das Gehäuse über Schleifringkontakte oder per Funk übertragen werden.

Zur Erhöhung der Auflösung des Messbereiches und der Vermeidung der Übertragung von Spannungen zwischen einem Gehäuse und der Welle sind jedoch schon Messanordnungen bekannt geworden, bei denen in Umfangsrichtung codierte Signalgeberelemente axial beidseitig eines torsionselastischen Abschnittes der Welle angeordnet sind, die mittels gehäusefest angeordneter Sensoren abgetastet werden. Durch den elastischen Abschnitt ergibt sich bei der Übertragung eines Drehmomentes eine größere Verdrehung der Teilwellen im Vergleich zueinander, wodurch die Auflösung der Messbereiche beider Sensoren ansteigt. Durch die gehäusefeste Anordnung der Sensoren entfällt die Übertragung von Spannungen über Schleifringkontakte oder per Funk. Die Sensoren stehen über Sensorleitungen mit einer elektronischen Auswerteeinheit in Verbindung, in der die Sensorsignale beider Sensoren im Wesentlichen durch eine Differenzbildung ausgewertet werden, und aus der Signaldifferenz das übertragene Drehmoment bestimmt wird.

Aus der DE 37 36 983 A1 ist eine Messanordnung einer drehbaren Welle mit einem Messflansch bekannt, mit dem das von einer zweiteiligen Welle übertragene Drehmoment sensorisch erfasst und gemessen werden kann. Ein Außenflansch des Messflansches, der drehfest mit einer ersten Teilwelle verbunden ist, weist in Umfangsrichtung verteilt mehrere radial nach innen gerichtete Zahnstege auf. Ein Innenflansch des Messflansches, der drehfest mit einer zweiten Teilwelle verbunden ist, weist in Umfangsrichtung verteilt mehrere radial nach außen gerichtete Zahnstege auf. Der Innenflansch ist axial und radial derart innerhalb des Außenflansches angeordnet, dass die Zahnstege beider Flansche jeweils wechselseitig in die Zahnlücken des jeweils anderen Flansches eingreifen. Zwischen den Zahnflanken der Zahnstege beider Flansche ist wechselweise jeweils eine Feder oder eine an der Flanke des Zahnsteges des Außenflansches befestigte Kraftmessdose angeordnet. Durch die Federn wird zwar eine Verdrehung der beiden Flansche und damit der beiden Teilwellen gegeneinander ermöglicht, die mit zunehmendem übertragenem Drehmoment ansteigt. Die Versorgungs- und Signalspannungen der Kraftmessdosen müssen jedoch zwischen dem Gehäuse und dem Außenflansch übertragen werden.

In der DE 199 36 293 A1 ist eine Messanordnung einer drehbaren Welle beschrieben, bei der ein Messkörper zwei Flansche aufweist, die drehfest mit jeweils einem Flansch einer Teilwelle verschraubt sind. Die Flansche des Messkörpers sind über ein rohrzylindrisches Übertragungselement miteinander verbunden, das durch radial äußere oder radial innere taschenförmige Ausnehmungen, die in Umfangsrichtung verteilt zwischen Axialstegen angeordnet sind, torsionselastisch ausgebildet ist. An der jeweiligen Bodenwand der Ausnehmungen sind radial außen und/oder innen Dehnmessstreifen aufgebracht, deren Widerstände sich torsionsbedingt ändern. Durch das torsionselastische Übertragungselement wird zwar eine Verdrehung der beiden Flansche des Messkörpers und damit der beiden Teilwellen gegeneinander ermöglicht, die mit zunehmendem übertragenem Drehmoment ansteigt. Die Versorgungs- und Signalspannungen der Dehnmessstreifen müssen jedoch zwischen dem Gehäuse und dem Außenflansch übertragen werden.

Eine weitere Messanordnung einer drehbaren Welle mit einer wellenseitigen Anordnung von Sensoren ist in der DE 10 2004 034 260 B3 bekannt. Die Welle weist zwei Teilwellen auf, die über einen torsionselastischen Torsionsstab miteinander verbunden sind. An beiden Teilwellen ist nahe des Torsionsstabes jeweils ein hülsenförmiger Mitnehmer befestigt, an dem axial in Richtung des Torsionsstabes gerichtete zylindersegmentförmige Kondensatorplatten befestigt sind. Die Kondensatorplatten der beiden Mitnehmer überlappen sich axial und sind in Umfangsrichtung unterschiedlich groß ausgeführt, sodass sich die Kapazitäten der durch die Kondensatorplatten gebildeten Kondensatoren abhängig von der relativen Verdrehung der Teilwellen zueinander ändern. Durch den Torsionsstab wird zwar eine Verdrehung der beiden Teilwellen gegeneinander ermöglicht, die mit zunehmendem übertragenem Drehmoment ansteigt. Die Versorgungs- und Signalspannungen der Kondensatoren müssen jedoch zwischen dem Gehäuse und den Mitnehmern übertragen werden.

In der DE 198 35 694 A1 ist dagegen eine Messanordnung einer drehbaren Welle beschrieben, bei der die Sensoren gehäuseseitig angeordnet sind. Die Welle weist zwei Teilwellen auf, die über einen torsionselastischen Torsionsstab miteinander verbunden sind. Auf der ersten Teilwelle ist eine Hülse mit einem außenverzahnten Zahnkranz befestigt. Auf der zweiten Teilwelle ist unmittelbar ein außenverzahnter Zahnkranz befestigt. In beide Zahnkränze greift jeweils ein achsparallel angeordnetes, als Winkelgeber wirksames Zahnrad ein, in oder an dem jeweils ein diagonal ausgerichteter Permanentmagnet angeordnet ist. Zur Erfassung der jeweiligen Drehwinkellage der Zahnräder sind magnetoresistive Sensoren vorgesehen, die gehäusefest nahe des Umfangs des jeweiligen Zahnrads angeordnet sind. Die Sensoren stehen über Sensorleitungen mit einer elektronischen Auswerteeinheit in Verbindung, in der die Sensorsignale beider Sensoren im Wesentlichen durch eine Differenzbildung ausgewertet werden, und aus der Signaldifferenz das übertragene Drehmoment bestimmt wird. Durch den Torsionsstab wird zwar eine Verdrehung der beiden Teilwellen gegeneinander ermöglicht, die mit zunehmendem übertragenem Drehmoment ansteigt. Durch die Hülse, die Zahnkränze und die als Winkelgeber wirksamen Zahnräder weist diese bekannte Messanordnung jedoch relativ große Abmessungen auf und erfordert einen hohen Fertigungsaufwand.

Angesichts der Nachteile der genannten Messvorrichtungen liegt der Erfindung die Aufgabe zugrunde, eine Messanordnung einer drehbaren Welle zur sensorischen Erfassung zumindest des von der Welle übertragenen Drehmomentes der eingangs genannten Art vorzuschlagen, welche eine hohe Auflösung der Drehbewegung in Umfangsrichtung der Welle sowie kompakte Abmessungen aufweist und einen relativ geringen Fertigungsaufwand erfordert.

Diese Aufgabe ist durch eine Messanordnung gelöst, welche die Merkmale des Anspruchs 1 aufweist. Vorteilhafte Weiterbildungen dieser Messanordnung sind in den abhängigen Ansprüchen genannt.

Demnach betrifft die Erfindung eine Messanordnung zur sensorischen Messung zumindest eines übertragenen Drehmomentes einer um ihre Längsachse drehbaren Welle, wobei die Welle wenigstens zwei über einen torsionselastischen Abschnitt miteinander verbundene Teilwellen aufweist, wobei benachbart zu dem torsionselastischen Abschnitt axial beidseitig zumindest mittelbar an den beiden Teilwellen jeweils ein umfangsseitig codiertes Signalgeberelement angeordnet ist, und wobei radial über jedem der beiden Signalgeberelemente jeweils ein Sensor angeordnet ist, welche über Sensorleitungen mit einer elektronischen Auswerteeinheit verbundenen sind.

Zur Lösung der gestellten Aufgabe ist bei dieser Messanordnung vorgesehen, dass die Signalgeberelemente als Magnetringe ausgebildet sind, welche aus einem ferromagnetischen Material bestehen, dass die Magnetringe derart magnetisiert sind, dass über zumindest einen Umfangsabschnitt derselben wechselweise Nordpoldomänen und Südpoldomänen aufeinanderfolgend angeordnet oder ausgebildet sind, und dass die Sensoren als magnetfeldresistive Sensoren ausgebildet sind. Als ferromagnetisches Material kann beispielsweise Eisen, Kobalt oder Nickel genutzt werden.

Durch die Ausbildung der Signalgeberelemente als Magnetringe mit in deren Umfangsrichtung über zumindest einen Umfangsabschnitt aufeinanderfolgend wechselweise angeordneten oder ausgebildeten Nordpoldomänen und Südpoldomänen wird eine kompakte Bauform, ein relativ niedriger Fertigungsaufwand sowie eine vergleichsweise große umfangsseitige Auflösung des Messbereiches erreicht. Die Nutzung von magnetfeldresistiven Sensoren gestattet die Ausführung der Signalgeberelemente als Magnetringe. An beiden Signalgeberelementen kann über das Sensorsignal des betreffenden Sensors anhand der bekannten Anzahl der über den Umfang angeordneten Polpaare der Magnetringe jeweils die Drehzahl der Welle beziehungsweise der jeweiligen Teilwelle sowie aus dem Drehwinkelversatz beziehungsweise der relativen Phasenlage der beiden Teilwellen zueinander das aktuell von der Welle übertragene Drehmoment bestimmt werden.

Um eine möglichst einfache Auswertung der Sensorsignale der Sensoren zu ermöglichen ist gemäß einer Ausführungsform vorgesehen, dass die Nordpoldomänen und die Südpoldomänen der beiden Magnetringe in Umfangsrichtung gleich breit sind, und dass die gleichartigen Magnetpoldomänen der beiden Magnetringe im unbelasteten Zustand der Welle zueinander axial gegenüberliegend angeordnet sind.

Um für bestimmte Steuerungsabläufe das Durchlaufen einer bestimmten Drehwinkelposition der Welle messen zu können, wie zum Beispiel der Drehwinkellage einer Kurbelwelle oder Nockenwelle für den oberen Totpunkt (OT) des ersten Zylinders eines Verbrennungskolbenmotors, kann auch vorgesehen sein, dass zumindest der ausgangsseitige Magnetring eine in Umfangsrichtung des Magnetrings oder der Welle sich erstreckende Anomalie aufweist. Eine derartige Anomalie des ausgangsseitigen Magnetrings kann auf einfache Weise durch eine Magnetisierungslücke gebildet sein.

Bei einer ersten diesbezüglichen Ausführungsform erstreckt sich die Magnetisierungslücke über mehr als die Hälfte des Umfangs des Magnetrings oder der Welle, wodurch der Magnetring über weniger als die Hälfte seines Umfangs magnetisierte Nordpoldomänen und magnetisierte Südpoldomänen aufweist.

Gemäß einer diesbezüglichen Weiterbildung ist vorgesehen, dass sich die Magnetisierungslücke über mehr als dreiviertel des Umfangs des Magnetrings oder der Welle erstreckt, wodurch der Magnetring über weniger als ein Viertel seines Umfangs magnetisierte Nordpoldomänen und magnetisierte Südpoldomänen aufweist.

In letzter Konsequenz kann zumindest der ausgangsseitige Magnetring lediglich als Ringsegment mit wechselweise aufeinander folgenden Nordpoldomänen und Südpoldomänen ausgebildet sein.

Alternativ dazu ist es jedoch auch möglich, dass die Anomalie des ausgangsseitigen Magnetrings durch eine in Umfangsrichtung breitere Nordpoldomäne sowie durch eine benachbarte, in Umfangsrichtung schmalere Südpoldomäne, oder durch eine in Umfangsrichtung breitere Südpoldomäne und eine benachbarte, in Umfangsrichtung schmalere Nordpoldomäne gebildet ist.

Die Sensoren sind bevorzugt als Hallsensoren ausgebildet und mit radialer Ausrichtung ihrer Sensitivitätsachsen in einem geringen radialen Abstand über dem jeweils zugeordneten Magnetring angeordnet. Hallsensoren weisen eine hohe Empfindlichkeit auf und sind aufgrund aktueller hoher Produktionszahlen preisgünstig zu beschaffen.

Der radiale Abstand zwischen den Hallsensoren und der Außenwand des jeweils zugeordneten Magnetrings kann beispielsweise nur 1 Millimeter bis 2 Millimeter betragen, wodurch einerseits die Berührungsfreiheit der Hallsensoren mit den Magnetringen und andererseits eine hohe Empfindlichkeit der Hallsensoren gewährleistet sind.

Der torsionselastische Abschnitt der Welle ist bevorzugt als eine elastische Klauenkupplung ausgebildet, die zwei mit der jeweiligen Teilwelle drehfest verbundene Kupplungsnaben mit stirnseitigen, miteinander in Eingriff stehenden Klauen aufweist, zwischen deren in Umfangsrichtung weisenden Flanken jeweils ein federelastischer Dämpfungskörper angeordnet ist. Eine derartige Klauenkupplung weist kompakte Abmessungen und einen relativ geringen Fertigungsaufwand auf. Durch die federelastischen Dämpfungselemente, mittels denen auch stoßartige Drehmomentschwankungen ausgeglichen und gedämpft werden, ist eine torsionselastische Verbindung der beiden Teilwellen gegeben, deren Drehwinkelversatz mit zunehmendem übertragenen Drehmoment ansteigt.

Die Dämpfungskörper bestehen bevorzugt aus einem elastomeren Material, bei dem es sich um Gummi oder Silikonkautschuk oder Polyurethan handeln kann.

Die Dämpfungskörper sind vorteilhaft über einen radial inneren Tragring miteinander verbunden und bilden mit diesem einen Elastomerstern, wodurch die Montage und Lagefixierung der Dämpfungskörper stark vereinfacht ist.

Die Magnetringe sind bevorzugt jeweils auf einer der Kupplungsnaben der Klauenkupplung angeordnet, da diese üblicherweise einen größeren Durchmesser als die Teilwellen aufweisen, wodurch eine größere umfangsseitige Auflösung der Messbereiche erzielt wird. Zudem können die Magnetringe dadurch vor der Montage der Klauenkupplung an der Welle auf den Kupplungsnaben angeordnet und befestigt werden.

Zur Montage der Magnetringe kann vorgesehen sein, dass die Magnetringe einen Innendurchmesser mit einem geringen Übermaß gegenüber dem Außendurchmesser der jeweiligen Kupplungsnabe aufweisen, und dass die Magnetringe mittels einer Verklebung drehfest und axial unverschiebbar auf den Kupplungsnaben befestigt sind.

Alternativ dazu kann hierzu jedoch auch vorgesehen sein, dass die Magnetringe einen Innendurchmesser mit einem definierten Untermaß gegenüber dem Außendurchmesser der jeweiligen Kupplungsnabe aufweisen, und dass die Magnetringe durch Aufschrumpfen kraftschlüssig drehfest und axial unverschiebbar auf den Kupplungsnaben befestigt sind.

Zur weiteren Verdeutlichung der Erfindung ist der Beschreibung eine Zeichnung mit zwei Ausführungsbeispielen beigefügt. In dieser zeigt
Fig. 1 eine erste Ausführungsform einer erfindungsgemäßen Messanordnung einer drehbaren Welle in einer vereinfachten, teilweise schematischen perspektivischen Ansicht, und
Fig. 2 eine zweite Ausführungsform einer erfindungsgemäßen Messanordnung einer drehbaren Welle in einer vereinfachten, teilweise schematischen perspektivischen Ansicht.

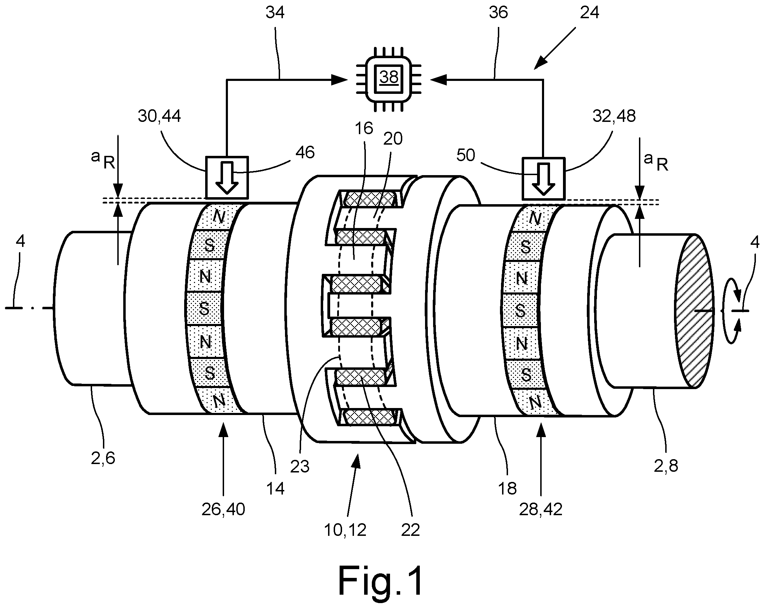

In Fig. 1 ist ein Abschnitt einer um ihre Längsachse 4 drehbaren Welle 2 sowie eine erste Ausführungsform einer die Merkmale der Erfindung aufweisende Messanordnung 24 abgebildet, mit welcher das von Welle 2 übertragene Drehmoment sowie die Drehzahl der Welle 2 sensorisch erfassbar sind. In der Abbildung von Fig. 1 ist die Welle 2 lastfrei, sie überträgt demnach gerade kein Drehmoment.

Die Welle 2 weist eine eingangsseitige Teilwelle 6 und eine ausgangsseitige Teilwelle 8 auf, welche über einen torsionselastischen Abschnitt 10 miteinander verbunden sind. Der torsionselastische Abschnitt 10 ist als eine elastische Klauenkupplung 12 ausgebildet, welche zwei mit der jeweiligen Teilwelle 6, 8 drehfest verbundene Kupplungsnaben 14, 18 mit stirnseitigen, miteinander in Eingriff stehenden Klauen 16, 20 aufweist. Zwischen den in Umfangsrichtung weisenden Flanken der Klauen 16, 20 ist jeweils ein federelastischer Dämpfungskörper 22 angeordnet. Die Dämpfungskörper 22 sind über einen nur angedeuteten, radial innen angeordneten Tragring 23 einstückig miteinander verbunden. Sowohl die Dämpfungskörper 22 als auch der Tragring 23 bestehen dabei aus einem elastomeren Material, wie Gummi, Silikonkautschuk oder Polyurethan. Zusammen bilden die Dämpfungskörper 22 und der Tragring 23 einen Elastomerstern, dessen radial von dem Tragring 23 abstehenden Dämpfungskörper 22 zwischen den in Umfangsrichtung weisenden Flanken der Klauen 16, 20 lagefixiert sind.

Die Messanordnung 24 weist jeweils ein axial beidseitig des torsionselastischen Abschnittes 10 angeordnetes, umfangsseitig codiertes Signalgeberelement 26, 28, jeweils ein radial benachbart über jedem der Signalgeberelemente 26, 28 angeordneten Sensor 30, 32 sowie eine über Sensorleitungen 34, 36 mit den Sensoren 30, 32 verbundene elektronische Auswerteeinheit 38. Die Signalgeberelemente 26, 28 sind als Magnetringe 40, 42 ausgebildet, welche aus einem ferromagnetischen Material, wie Eisen, Kobalt oder Nickel, bestehen oder dieses zumindest aufweisen und derart magnetisiert sind, dass wechselweise Nordpoldomänen N und Südpoldomänen S in Umfangsrichtung aufeinanderfolgend angeordnet sind. Die Nordpoldomänen N und die Südpoldomänen S der beiden Magnetringe 40, 42 sind in Umfangsrichtung gleich breit, und diese gleichartigen Magnetpoldomänen N, S der Magnetringe 40, 42 sind im dargestellten unbelasteten Zustand der Welle 2 einander axial gegenüberliegend angeordnet.

Die beiden Magnetringe 40, 42 können einen Innendurchmesser mit einem geringen Übermaß gegenüber dem Außendurchmesser der jeweiligen Kupplungsnabe 14, 18 aufweisen und mittels einer Verklebung drehfest und axial unverschiebbar auf den jeweils zugeordneten Kupplungsnaben 14, 18 befestigt sein. Alternativ dazu können die Magnetringe 40, 42 auch einen Innendurchmesser mit einem definierten Untermaß gegenüber dem Außendurchmesser der jeweiligen Kupplungsnabe 14, 18 aufweisen durch Aufschrumpfen kraftschlüssig drehfest und axial unverschiebbar auf den zugeordneten Kupplungsnaben 14, 18 befestigt sein.

Bei den Sensoren 30, 32 handelt es sich um magnetfeldresistive Sensoren, die bevorzugt als Hallsensoren 44, 48 ausgebildet und mit radialer Ausrichtung ihrer Sensitivitätsachsen 46, 50 in einem geringen radialen Abstand aR über dem jeweils zugeordneten Magnetring 40, 42 angeordnet sind. Der radiale Abstand aR zwischen den Hallsensoren 44, 48 und der Außenwand des jeweils zugeordneten Magnetrings 40, 42 beträgt ein bis zwei Millimeter. Hierdurch ist einerseits die Berührungsfreiheit der Hallsensoren 44, 48 mit den Magnetringen 40,42 und andererseits ein starkes Messsignal für die Hallsensoren 44, 48 gegeben ist.

An den beiden Magnetringen 40, 42 kann über das Sensorsignal des betreffenden Hallsensors 44, 48 anhand der bekannten Anzahl der über den Umfang angeordneten Poldomänen N, S der Magnetringe 40, 42 jeweils die Drehzahl der Welle 2 beziehungsweise der jeweiligen Teilwelle 6, 8 sowie aus dem Drehwinkelversatz beziehungsweise der relativen Phasenlage der beiden Teilwellen 6, 8 zueinander das aktuell von der Welle 2 übertragene Drehmoment bestimmt werden.

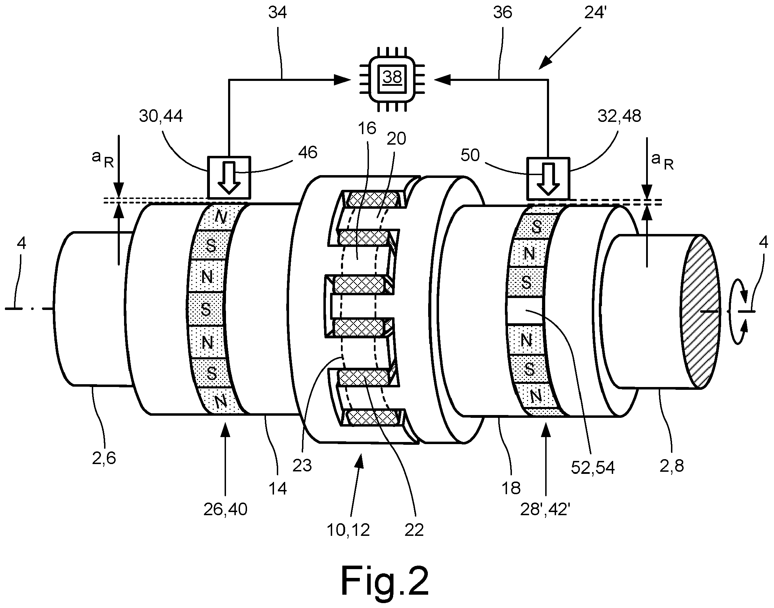

Die in Fig. 2 zusammen mit dem Abschnitt der um ihre Längsachse 4 drehbaren Welle 2 abgebildete zweite Ausführungsform der Messanordnung 24' unterscheidet sich von der ersten in Fig. 1 abgebildeten ersten Messanordnung 24 dadurch, dass der auf der ausgangsseitigen Kupplungsnabe 18 angeordnete Magnetring 42' des umfangsseitig codierten Signalgeberelements 28' eine Anomalie 52 in Form einer Magnetisierungslücke 54 aufweist. Demzufolge weisen die Nordpoldomänen N und Südpoldomänen S des ausgangsseitigen Magnetrings 42' eine geringere umfangsseitige Breite als die Nordpoldomänen N und Südpoldomänen S des eingangsseitigen Magnetrings 40 auf.

An dem ausgangsseitigen Magnetring 42' kann eine lückenlose Anomalie aber auch durch eine in Umfangsrichtung breitere Nordpoldomäne N sowie durch eine benachbarte, in Umfangsrichtung schmalere Südpoldomäne S oder durch eine in Umfangsrichtung breitere Südpoldomäne S und eine benachbarte, in Umfangsrichtung schmalere Nordpoldomäne N geschaffen sein.

Mittels der Magnetringe 40, 42' und der Hallsensoren 44, 48 kann wie zu der ersten Ausführungsform der Messanordnung 24 gemäß Fig. 1 beschrieben jeweils die Drehzahl der Welle 2 beziehungsweise der jeweiligen Teilwelle 6, 8 sowie aus dem Drehwinkelversatz beziehungsweise der Phasenlage der beiden Teilwellen 6, 8 zueinander das aktuell von der Welle 2 übertragene Drehmoment bestimmt werden. Mittels der Anomalie 52 des ausgangsseitigen Magnetrings 42' kann zusätzlich das für bestimmte Steuerungsabläufe relevante Durchlaufen einer bestimmten Drehwinkelposition der Welle 2 beziehungsweise der ausgangsseitigen Teilwelle 8, wie zum Beispiel der Drehwinkellage einer Kurbelwelle oder Nockenwelle für den oberen Totpunkt (OT) des ersten Zylinders eines Verbrennungskolbenmotors, sensorisch erfasst werden.

### Bezugszeichenliste

- 2: Welle
- 4: Längsachse der Welle
- 6: Eingangsseitige Teilwelle
- 8: Ausgangsseitige Teilwelle
- 10: Torsionselastischer Abschnitt der Welle
- 12: Elastische Klauenkupplung
- 14: Eingangsseitige Kupplungsnabe
- 16: Klaue der eingangsseitigen Kupplungsnabe
- 18: Ausgangsseitige Kupplungsnabe
- 20: Klaue der ausgangsseitigen Kupplungsnabe
- 22: Dämpfungskörper
- 23: Tragring der Dämpfungskörper
- 24: Messanordnung (erste Ausführungsform)
- 24': Messanordnung (zweite Ausführungsform)
- 26: Eingangsseitiges Signalgeberelement
- 28, 28': Ausgangsseitiges Signalgeberelement
- 30: Eingangsseitiger Sensor
- 32: Ausgangsseitiger Sensor
- 34: Erste Sensorleitung
- 36: Zweite Sensorleitung
- 38: Elektronische Auswerteeinheit
- 40: Eingangsseitiger Magnetring
- 42, 42': Ausgangsseitiger Magnetring
- 44: Eingangsseitiger Hallsensor
- 46: Sensitivitätsachse des eingangsseitigen Hallsensors
- 48: Ausgangsseitiger Hallsensor
- 50: Sensitivitätsachse des ausgangsseitigen Hallsensors
- 52: Anomalie
- 54: Magnetisierungslücke
- aR: Radialer Abstand
- N: Nordpoldomäne, Magnetpoldmäne
- OT: Oberer Totpunkt
- S: Südpoldomäne, Magnetpoldomäne

## Patentansprüche

1. Messanordnung (24, 24') zur sensorischen Messung zumindest eines übertragenen Drehmomentes einer um ihre Längsachse (4) drehbaren Welle (2), wobei die Welle (2) wenigstens zwei über einen torsionselastischen Abschnitt (10) miteinander verbundene Teilwellen (6, 8) aufweist, wobei benachbart zu dem torsionselastischen Abschnitt (10) axial beidseitig zumindest mittelbar an den beiden Teilwellen (6, 8) jeweils ein umfangsseitig codiertes Signalgeberelement (26, 28, 28') angeordnet ist, und wobei radial über jedem der beiden Signalgeberelemente (26, 28, 28') jeweils ein Sensor (30, 32) angeordnet ist, welche über Sensorleitungen (34, 36) mit einer elektronischen Auswerteeinheit (38) verbundenen sind, **dadurch gekennzeichnet, dass** die Signalgeberelemente (26, 28, 28') als Magnetringe (40, 42, 42') ausgebildet sind, welche aus einem ferromagnetischen Material bestehen, dass die Magnetringe (40, 42, 42') derart magnetisiert sind, dass über zumindest einen Umfangsabschnitt derselben wechselweise Nordpoldomänen (N) und Südpoldomänen (S) aufeinanderfolgend angeordnet oder ausgebildet sind, und dass die Sensoren (30, 32) als magnetfeldresistive Sensoren ausgebildet sind.

2. Messanordnung (24, 24') nach Anspruch 1, **dadurch gekennzeichnet, dass** die Nordpoldomänen (N) und die Südpoldomänen (S) der beiden Magnetringe (40, 42, 42') in Umfangsrichtung gleich breit sind, und dass die gleichartigen Magnetpoldomänen (N, S) der beiden Magnetringe (40, 42, 42') im unbelasteten Zustand der Welle (2) zueinander axial gegenüberliegend angeordnet sind.

3. Messanordnung (24') nach Anspruch 1 oder 2, **dadurch gekennzeichnet, dass** zumindest der ausgangsseitige Magnetring (42') eine in Umfangsrichtung der Welle (2) sich erstreckende Anomalie (52) aufweist.

4. Messanordnung (24') nach Anspruch 3, **dadurch gekennzeichnet, dass** die Anomalie (52) des ausgangsseitigen Magnetrings (42') durch eine Magnetisierungslücke (54) gebildet ist.

5. Messanordnung (24') nach Anspruch 4, **dadurch gekennzeichnet, dass** sich die Magnetisierungslücke (54) über mehr als die Hälfte des Umfangs des Magnetrings (42') erstreckt, wodurch der Magnetring (42') über weniger als die Hälfte seines Umfangs magnetisierte Nordpoldomänen (N) und magnetisierte Südpoldomänen (S) aufweist.

6. Messanordnung (24') nach Anspruch 5, **dadurch gekennzeichnet, dass** sich die Magnetisierungslücke (54) über mehr als dreiviertel des Umfangs des Magnetrings (42') erstreckt, wodurch der Magnetring (42') über weniger als ein Viertel seines Umfangs magnetisierte Nordpoldomänen (N) und magnetisierte Südpoldomänen (S) aufweist.

7. Messanordnung (24') nach Anspruch 3, **dadurch gekennzeichnet, dass** die Anomalie (52) des ausgangsseitigen Magnetrings (42') durch eine in Umfangsrichtung breitere Nordpoldomäne (N) sowie durch eine benachbarte, in Umfangsrichtung schmalere Südpoldomäne (S), oder durch eine in Umfangsrichtung breitere Südpoldomäne (S) und eine benachbarte, in Umfangsrichtung schmalere Nordpoldomäne (N) gebildet ist.

8. Messanordnung (24, 24') nach einem der Ansprüche 1 bis 7, **dadurch gekennzeichnet, dass** die Sensoren (30, 32) als Hallsensoren (44, 48) ausgebildet und mit radialer Ausrichtung ihrer Sensitivitätsachsen (46, 50) in einem geringen radialen Abstand (aR) über dem jeweils zugeordneten Magnetring (40, 42, 42') angeordnet sind.

9. Messanordnung (24, 24') nach Anspruch 8, **dadurch gekennzeichnet, dass** der radiale Abstand (aR) zwischen den Hallsensoren (44, 48) und der Außenwand des jeweils zugeordneten Magnetrings (40, 42, 42') ein Millimeter bis zwei Millimeter beträgt.

10. Messanordnung (24, 24') nach einem der Ansprüche 1 bis 8, **dadurch gekennzeichnet, dass** der torsionselastische Abschnitt (10) der Welle (2) als eine elastische Klauenkupplung (12) ausgebildet ist, dass die Klauenkupplung (12) zwei mit der jeweiligen Teilwelle (6, 8) drehfest verbundene Kupplungsnaben (14, 18) mit stirnseitigen, miteinander in Eingriff stehenden Klauen (16, 20) aufweist, und dass zwischen den in Umfangsrichtung weisenden Flanken der Klauen (16, 20) jeweils ein federelastischer Dämpfungskörper (22) angeordnet ist.

11. Messanordnung (24, 24') nach Anspruch 10, **dadurch gekennzeichnet, dass** die Dämpfungskörper (22) aus einem elastomeren Material bestehen.

12. Messanordnung (24, 24') nach Anspruch 11, **dadurch gekennzeichnet, dass** es sich bei dem elastomeren Material der Dämpfungskörper (22) um Gummi oder Silikonkautschuk oder Polyurethan handelt.

13. Messanordnung (24, 24') nach einem der Ansprüche 10 bis 12, **dadurch gekennzeichnet, dass** die Dämpfungskörper (22) über einen in Bezug zu diesem radial innen angeordneten Tragring (23) einstückig miteinander verbunden sind und mit diesem einen Elastomerstern bilden.

14. Messanordnung (24, 24') nach einem der Ansprüche 10 bis 13, **dadurch gekennzeichnet, dass** die Magnetringe (40, 42, 42') jeweils auf einer der Kupplungsnaben (14, 18) der Klauenkupplung (12) angeordnet sind.

15. Messanordnung (24, 24') nach Anspruch 14, **dadurch gekennzeichnet, dass** die Magnetringe (40, 42, 42') einen Innendurchmesser mit einem geringen Übermaß gegenüber dem Außendurchmesser der jeweiligen Kupplungsnabe (14, 18) aufweisen, und dass die Magnetringe (40, 42, 42') mittels einer Verklebung drehfest und axial unverschiebbar auf den Kupplungsnaben (14, 18) befestigt sind oder die Magnetringe (40, 42, 42') einen Innendurchmesser mit einem definierten Untermaß gegenüber dem Außendurchmesser der jeweiligen Kupplungsnabe (14, 18) aufweisen, und dass die Magnetringe (40, 42, 42') durch Aufschrumpfen kraftschlüssig drehfest und axial unverschiebbar auf den Kupplungsnaben (14, 18) befestigt sind.
